# EUROPEAN PATENT APPLICATION

(11) **EP 4 033 458 A2**
(43) Date of publication of application: **27.07.2022**
(21) Application number: 22171407.4
(22) Date of filing: 03.05.2022
(51) Int. Cl.: G06V 40/18, G06V 40/40, G06V 10/56, G06V 10/145

(54) **METHOD AND APPARATUS OF FACE ANTI-SPOOFING, DEVICE, STORAGE MEDIUM, AND COMPUTER PROGRAM PRODUCT**

(30) Priority: 13.05.2021 CN 202110524896
(71) Applicant: BEIJING BAIDU NETCOM SCIENCE TECHNOLOGY CO., LTD., No. 10 Shangdi 10th Street Haidian District Beijing 100085 (CN)
(72) Inventor: WANG, Keyao, Beijing, 100085 (CN); LU, Jie, Beijing, 100085 (CN); LI, Yunhao, Beijing, 100085 (CN); YUE, Haixiao, Beijing, 100085 (CN); FENG, Haocheng, Beijing, 100085 (CN)
(74) Representative: Carpmaels & Ransford LLP

(57) **Abstract**

A method and apparatus of face anti-spoofing, a device, a storage medium, and a computer program product are provided, which relate to a field of artificial intelligence, in particular to a computer vision and deep learning technology, and can be applied in a face recognition scene. The method includes: acquiring a face image sequence including a plurality of face images; acquiring, based on the face image sequence, a corresponding eye image sequence including a plurality of eye images; recognizing, based on the eye image sequence, a color of an optical spot caused by a pupil in each eye image of the plurality of eye images, so as to obtain a pupil color recognition result; and determining a face anti-spoofing result by using at least one face image in the face image sequence, in response to the pupil color recognition result indicating that the face image sequence is a sequence of face images captured on site after a face recognition process is started.

## Description

### TECHNICAL FIELD

The present disclosure relates to a field of artificial intelligence, in particular to a computer vision and deep learning technology, which may be applied to a face recognition scene. In particular, the present disclosure relates to a method and apparatus of face anti-spoofing, a device, a storage medium, and a computer program product.

### BACKGROUND

Face anti-spoofing is used to determine whether a face image is taken from a living face or not. A face anti-spoofing module is a basic module of a face recognition system, which can ensure a security of the face recognition system.

### SUMMARY

The present disclosure provides a method and apparatus of face anti-spoofing, a device, a storage medium, and a computer program product.

According to an aspect of the present disclosure, a method of face anti-spoofing is provided, and the method includes: acquiring a face image sequence including a plurality of face images; acquiring, based on the face image sequence, a corresponding eye image sequence including a plurality of eye images; recognizing, based on the eye image sequence, a color of an optical spot caused by a pupil in each eye image of the plurality of eye images, so as to obtain a pupil color recognition result; and determining a face anti-spoofing result by using at least one face image in the face image sequence, in response to the pupil color recognition result indicating that the face image sequence is a sequence of face images captured on site after a face recognition process is started.

According to another aspect of the present disclosure, a method of face anti-spoofing is provided, and the method includes: acquiring a face image; acquiring a corresponding eye image based on the face image; recognizing, based on the eye image, a color of an optical spot caused by a pupil in the eye image, so as to obtain a pupil color recognition result; and determining a face anti-spoofing result by using the face image, in response to the pupil color recognition result indicating that the face image is captured on site after a face recognition process is started.

According to another aspect of the present disclosure, an apparatus of face anti-spoofing s provided, and the apparatus includes: a first acquisition module configured to acquire a face image sequence including a plurality of face images; a second acquisition module configured to acquire, based on the face image sequence, a corresponding eye image sequence including a plurality of eye images; a first image recognition module configured to recognize, based on the eye image sequence, a color of an optical spot caused by a pupil in each eye image of the plurality of eye images, so as to obtain a pupil color recognition result; and a first determination module configured to determine a face anti-spoofing result by using at least one face image in the face image sequence, in response to the pupil color recognition result indicating that the face image sequence is a sequence of face images captured on site after a face recognition process is started.

According to another aspect of the present disclosure, another apparatus of face anti-spoofing is provided, and the apparatus includes: a third acquisition module configured to acquire a face image; a fourth acquisition module configured to acquire a corresponding eye image based on the face image; a second image recognition module configured to recognize, based on the eye image, a color of an optical spot caused by a pupil in the eye image, so as to obtain a pupil color recognition result; and a second determination module configured to determine a face anti-spoofing result by using the face image, in response to the pupil color recognition result indicating that the face image is captured on site after a face recognition process is started.

According to another aspect of the present disclosure, an electronic device is provided, and the electronic device includes: at least one processor; and a memory communicatively connected to the at least one processor, wherein the memory stores instructions executable by the at least one processor, and the instructions, when executed by the at least one processor, cause the at least one processor to implement the method described in the embodiments of the present disclosure.

According to another aspect of the present disclosure, a non-transitory computer-readable storage medium having computer instructions stored thereon is provided, wherein the computer instructions are configured to cause a computer to implement the method described in the embodiments of the present disclosure.

According to another aspect of the present disclosure, a computer program product containing a computer program is provided, wherein the computer program, when executed by a processor, causes the processor to implement the method described in the embodiments of the present disclosure.

It should be understood that content described in this section is not intended to identify key or important features in the embodiments of the present disclosure, nor is it intended to limit the scope of the present disclosure. Other features of the present disclosure will be easily understood through the following description.

### BRIEF DESCRIPTION OF THE DRAWINGS

The accompanying drawings are used to understand the present disclosure better and do not constitute a limitation to the present disclosure, in which:
FIG. 1 schematically shows a system architecture for a method and apparatus of face anti-spoofing of the embodiments of the present disclosure;
FIG. 2 schematically shows a flowchart of a method of face anti-spoofing according to the embodiments of the present disclosure;
FIG. 3 schematically shows a flowchart of a method of face anti-spoofing according to the embodiments of the present disclosure;
FIG. 4 schematically shows a schematic diagram of face anti-spoofing according to the embodiments of the present disclosure;
FIG. 5 schematically shows a block diagram of an apparatus of face anti-spoofing according to the embodiments of the present disclosure;
FIG. 6 schematically shows a block diagram of an apparatus of face anti-spoofing according to the embodiments of the present disclosure; and
FIG. 7 schematically shows a block diagram of an electronic device for implementing a method of face anti-spoofing according to the embodiments of the present disclosure.

### DETAILED DESCRIPTION OF EMBODIMENTS

Exemplary embodiments of the present disclosure will be described below with reference to the accompanying drawings, which include various details of the embodiments of the present disclosure to facilitate understanding and should be considered as merely exemplary. Therefore, those of ordinary skilled in the art should realize that various changes and modifications may be made to the embodiments described herein without departing from the scope and spirit of the present disclosure. Likewise, for clarity and conciseness, descriptions of well-known functions and structures are omitted in the following description.

Various schemes for implementing face anti-spoofing algorithms mainly include a method for manually extracting and classifying face features and a deep learning method using a neural network.

It should be understood that when the method for manually extracting and classifying face features is used for face anti-spoofing, a manually designed feature extractor is needed to extract face features, and then a conventional classifier such as a support vector machine (SVM) is needed to classify the features, and finally a face anti-spoofing determination result is obtained.

If a facial posture is excessive or an illumination difference is too great in a real scene, the above-mentioned method for face anti-spoofing may have a poor robustness and obtain an inaccurate detection result, thereby resulting in an unsatisfactory recognition effect.

When the deep learning method based on the neural network is used for face anti-spoofing, the neural network needs to be used for the extraction and classification of face features. Different from the above-mentioned conventional method, the deep learning method can be used to extract a more stable face feature, which greatly improves a detection accuracy.

In some application scenes, a face anti-spoofing algorithm based on deep learning has a poor generalization, and has a problem of poor security for complex attack sample and attack manner, which may affect a performance of practical application.

The embodiments of the present disclosure provide a method of face anti-spoofing based on an active light, in which a random color sequence is generated as a verification code, lights having different colors are illuminated to a face by using a screen of a device, while images of the face illuminated by the lights having different colors are captured using a front camera of the device, and then a pupil color algorithm is used to verify whether an order of colors of the actually acquired images is consistent with an order of colors represented by the generated random verification code or not. If the two are consistent, it indicates that the actually acquired images are face images captured on site by the front camera of the device. On this basis, at least one of the actually acquired images is used as an input of a convolutional neural network for image recognition, and a final face anti-spoofing result may be obtained.

Through the embodiments of the present disclosure, it may be ensured that the face image input into a face anti-spoofing model (convolutional neural network) for face anti-spoofing is an image captured on site based on a current task, rather than a face image attack sample illegally injected by an attacker by maliciously blocking the front camera of the device from capturing an image, so that the security of the whole face anti-spoofing process may be improved.

The present disclosure will be described in detail below with reference to the accompanying drawings and specific embodiments.

A system architecture for a method and apparatus of face anti-spoofing of the embodiments of the present disclosure is described below.

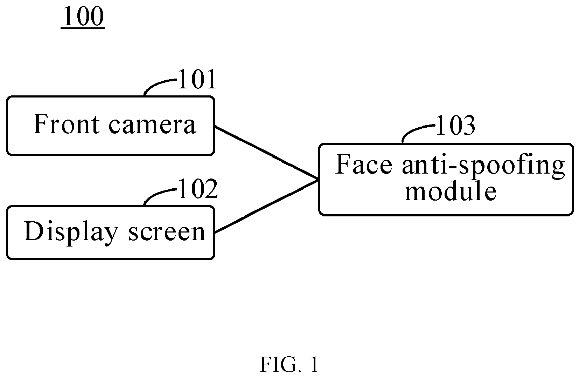

FIG. 1 schematically shows a system architecture for a method and apparatus of face anti-spoofing of the embodiments of the present disclosure. It should be noted that the system architecture shown in FIG. 1 is only an example of a system architecture in which the embodiments of the present disclosure may be applied, so as to help those skilled in the art to understand the technical content of the present disclosure. It does not mean that the embodiments of the present disclosure may not be applied to other environments or scenes.

As shown in FIG. 1, a face recognition system architecture 100 may include: a front camera 101 of a device, a display screen 102 of the device, and a face anti-spoofing module 103 of the device.

In the embodiments, the face anti-spoofing module 103 may generate a random color sequence (such as red, green and blue) as a verification code. According to an order of colors in the random color sequence generated by the face anti-spoofing module 103, the display screen 102 may sequentially output lights having corresponding colors to a face, and after each light having a color is output from the display screen 102, the front camera 101 may capture an image of the face illuminated by a light having the corresponding color. Then, by using a pupil color algorithm, the face anti-spoofing module 103 may verify whether an order of colors of the actually acquired images is consistent with an order of colors represented by the generated random verification code or not. If it is verified that the two are consistent, it means that the actually acquired images are face images captured on site by the front camera 101 based on the current task. In contrast, if it is verified that the two are not consistent, it means that the actually acquired images are face image attack samples illegally injected by the attacker.

On the basis of determining that the actually acquired images are face images captured on site by the front camera 101 based on the current task, the face anti-spoofing module 103 may use at least one of the actually acquired images as an input of the face anti-spoofing model (such as a convolutional neural network) for face anti-spoofing, so as to finally obtain a face anti-spoofing result.

It should be understood that the lights having different colors are output by using the display screen shown in FIG. 1 is merely schematic. According to the implementation needs, other types of active light sources may be provided in the system architecture to output lights having different colors.

An application scene for a method and apparatus of face anti-spoofing of the embodiments of the present disclosure is described below.

It should be noted that the method of face anti-spoofing provided by the embodiments of the present disclosure may be applied to various scenes in a field of face recognition, such as attendance, access control, security, financial payment and so on, so as to help improve an anti-spoofing performance.

By using the face anti-spoofing scheme provided by the embodiments of the present disclosure, most common attacks at present may be effectively resisted, while a convergence speed of network training may be accelerated, a generalization and an accuracy of the face anti-spoofing algorithm may be increased, a defense effect of the face anti-spoofing algorithm against unknown attack samples or attack manners may be improved, which may help various applications based on face anti-spoofing technology to improve effect and user experience, and which is conducive to a further promotion of business projects.

According to the embodiments of the present disclosure, the present disclosure provides a method of face anti-spoofing.

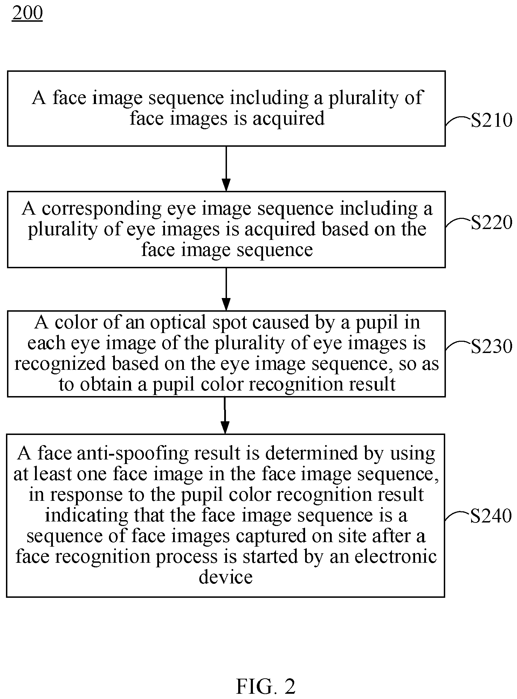

FIG. 2 schematically shows a flowchart of a method of face anti-spoofing according to the embodiments of the present disclosure.

As shown in FIG. 2, a method 200 of face anti-spoofing may include operations S210 to S240.

In operation S210, a face image sequence including a plurality of face images is acquired.

In operation S220, a corresponding eye image sequence including a plurality of eye images is acquired based on the face image sequence.

In operation S230, a color of an optical spot caused by a pupil in each eye image of the plurality of eye images is recognized based on the eye image sequence, so as to obtain a pupil color recognition result.

In operation S240, a face anti-spoofing result is determined by using at least one face image in the face image sequence, in response to the pupil color recognition result indicating that the face image sequence is a sequence of face images captured on site after a face recognition process is started by an electronic device.

It should be noted that the pupil color recognition result may be used to determine whether the face image sequence is a sequence of face images captured on site after the face recognition process is started by the electronic device. The electronic device may emit a light having a color at a predetermined time interval within a preset time period after the face recognition process is started, and may capture a face image after each light having a color is emitted.

In some embodiments, each time the face anti-spoofing is performed, it may be verified whether the currently acquired face images are images captured on site after the electronic device (such as a face recognition device) starts a current face recognition process. When it is determined that the currently acquired face images are images captured on site after the electronic device starts the current face recognition process, at least one of the currently acquired face images is used as an input of the face anti-spoofing model to continue the face anti-spoofing. In this way, it may be ensured that the image actually used for face anti-spoofing is a face image captured on site by the current electronic device in a current anti-spoofing task, rather than a face image attack sample (including a face image captured in advance or a face image captured on site by another electronic device) illegally injected by an attacker by blocking the current electronic device from capturing an image on site.

Therefore, through the embodiments of the present disclosure, in the face anti-spoofing process, an injection attack of face image sample may be prevented, so that the security of face recognition may be improved.

When a face is illuminated with lights having different colors, optical spots having different colors may be caused by a pupil of the eye. Therefore, in the embodiments of the present disclosure, it is considered to use this principle to verify whether the currently acquired face image is an image captured on site after the electronic device starts the current face recognition process.

In an example, each time the face anti-spoofing is performed, a random color sequence (such as red, green and blue) may be generated as the verification code, while the electronic device is controlled to emit a light having a color at a predetermined time interval (e.g., 5 seconds) to illuminate the face, such as emit red light, green light and blue light sequentially according to the color sequence. The electronic device captures a face image after each light having a color is emitted. For example, a face image is captured after the red light is emitted, a face image is captured after the green light is emitted, and a face image is captured after the blue light is emitted. And thus, a total of three face images are captured sequentially. On this basis, in the current face anti-spoofing process, the face images acquired by the face anti-spoofing module in theory may include the above-mentioned three face images in sequence. However, there is a possibility that an attacker injects face image attack samples to pass for the above-mentioned three face images. Therefore, three corresponding eye images may be acquired based on the actually acquired three face images, and then a pupil color algorithm may be used to verify whether an order of colors of optical spots caused by pupils in the three eye images is consistent with the order of colors represented by the above-mentioned verification code, such as whether the order is red, green and blue or not. If the two are consistent, it is determined that the images actually acquired by the face anti-spoofing module are the three face images sequentially captured on site by the electronic device in the current face anti-spoofing task. Otherwise, if the two are inconsistent, it is determined that the images actually acquired by the face anti-spoofing module are illegally injected face image attack samples.

Further, in some application scenes, there are other attack manners, such as attacking by using an attack tool, e.g., electronic photo, paper photo, or 3D head model, 3D headgear, etc., which is pretended to be a living face.

The reflectivity of attack tools of various materials to light may be different from a reflectivity of a living skin to light. In operation S240 of the method of face anti-spoofing based on active light, at least one face image in the face image sequence is used for face anti-spoofing, which may fully consider the reflectivity of living face to light and the reflectivity of non-living face to light, that is, it may be determined whether the face image input into the model is an image taken from a living face or an image taken from an attack tool. Therefore, the scheme may be implemented to obtain a more accurate face anti-spoofing result.

It should be understood that in the embodiments of the present disclosure, the face anti-spoofing model may be pre-trained based on a positive face image sample and various negative samples (such as various face image attack samples). In operation S240, at least one face image in the face image sequence may be directly input into the model for face anti-spoofing.

Therefore, through the embodiments of the present disclosure, the accuracy and generalization of the anti-spoofing algorithm may be greatly improved in a case of a complex sample attack in the face anti-spoofing process.

It should be noted that in the embodiments of the present disclosure, a feature extraction network may use MobileNet V2 as a backbone of the convolutional neural network. Continuing to refer to the above examples, the three face images captured under lights having different colors may be connected in a channel layer to form a 9-channel image which is used as an input of the convolution neural network, and the input is subjected to a global average pooling on a feature map of a last layer of the network. Finally, an image classification is performed through a fully connected layer and a Softmax layer to achieve the final face anti-spoofing classification.

It should be noted that in the embodiments of the present disclosure, when the random color sequence is generated as the verification code, the color sequence may include a plurality of elements, which may increase a difficulty of decoding the color sequence and improve the face anti-spoofing performance. It should be understood that in the embodiments of the present disclosure, when the random color sequence is generated as the verification code, the color sequence may also include only one element, and the scheme will be described in detail in later embodiments.

As an embodiment, the acquiring, based on the face image sequence, a corresponding eye image sequence including a plurality of eye images may include the following operations.

For each face image in the face image sequence, a face region detection is performed to obtain a first image in which a target face has been detected; a key point coordinate of the target face is determined based on the first image; and a face alignment is performed on the target face based on the key point coordinate, so as to obtain a second image with an aligned face.

A corresponding eye image in the eye image sequence is determined based on the second image.

In the embodiments of the present disclosure, the face image is acquired, then the eye image is cut out from the face image, and then the pupil color recognition is performed based on the eye image. Thus, a quality of the eye image is very important to a result of the pupil color recognition.

Therefore, in the embodiments of the present disclosure, before cutting out the eye image from the face image, an image preprocessing operation may be performed to improve the quality of the acquired eye image. In the embodiments of the present disclosure, the image preprocessing operation may include but is not limited to face position detection, face key point detection, face alignment, image normalization processing, random data enhancement, etc.

In an example, in the face anti-spoofing process, a face recognition device is used to output lights having three different random colors to illuminate the face (including a living face and/or an non-living face (attack tool)), then the front camera of the face recognition device is used to capture the face images of the face illuminated by the lights having three colors, and the three images captured in sequence are grouped as a face image sequence.

It may be defined that the face contains N key points, such as 72 key points including (x1, y1), (x2, y2)..., (x71, y71), (x72, y72).

Then, the image preprocessing may be performed on each of the three images. For each image, the face is detected by a detection model to obtain an approximate location region of a target face, that is, obtain an image containing the target face. The detection model is a pre-trained face detection model, which may detect a location of the face in the image. Then, a face key point may be detected by a face key point detection model according to the detected face region, so as to obtain a key point coordinate value of the target face. The face key point detection model is a pre-trained model that may be directly called, and the image in which the target face has been detected may be input to obtain coordinate values of N face key points, such as 72 face key points including (x1, y1)... (x72, y72). Then, a face alignment is performed on the target face according to the key point coordinate values of the target face, so as to obtain a corresponding face image. In an example, a method may include, for example, determining maximum and minimum values of x and y (e.g., xmin, xmax, ymin, ymax) according to the coordinate values of the 72 face key points, then determining a face frame according to the maximum and minimum values of x and y, then expanding the face frame three times and cutting out the face image, and adjusting a size of the cut out face image to 224×224, in which the adjusted image may be used as an image obtained after the face alignment.

Next, a normalization may be performed on each image obtained after the face alignment. In the embodiments of the present disclosure, the image normalization refers to normalizing various pixels in the image in sequence. In some embodiments, the image normalization method includes: reducing a pixel value of each pixel in the image by 128 and then dividing by 256, so that the pixel value of the pixel is in an interval of [-0.5, 0.5].

Further, a random data enhancement processing may be performed on each image obtained after the normalization.

In the embodiments of the present disclosure, a corresponding eye image may be cut out from each image obtained after the image preprocessing, and finally three eye images may be obtained for subsequent pupil color recognition.

Through the embodiments of the present disclosure, the face alignment is performed on the image before cutting out the eye image, so as to avoid a poor quality of the acquired eye image due to a deviation of the face, which may result in a failure of pupil color recognition or a poor effect of pupil color recognition.

Further, as an embodiment, determining a corresponding eye image in the eye image sequence based on the second image may include the following operations.

A left eye image and a right eye image are acquired based on the second image.

The left eye image and the right eye image are combined to obtain a corresponding binocular image in the eye image sequence.

In some embodiments, the corresponding binocular image may be cut out from each face image obtained after the preprocessing for subsequent pupil color recognition.

Continuing to refer to the above examples, the binocular image may be cut out by the following operation. According to the above examples, after the coordinate values of the 72 face key points are obtained, an image in a binocular region is cut out, then corner coordinates (x13, y13) and (x17, y17) of the left eye are determined according to the face key points, and a distance L1 between corners of the left eye and a center point C1 of the left eye are calculated based on the two corner coordinates. An affine transformation matrix M1 may then be obtained, and according to the affine transformation matrix M1, an original image (the image in the binocular region cut out previously) is affine-transformed to an image of a size of 56x36 that only contains the left eye.

Similarly, corner coordinates (x30, y30) and (x34, y34) of the right eye may be determined according to the face key points, and a distance L2 between corners of the right eye and a center point C2 of the right eye may be calculated based on the two corner coordinates. An affine transformation matrix M2 may then be obtained, and according to the affine transformation matrix M2, the original image (the image in the binocular region cut out previously) is affine-transformed to an image of a size of 56×36 that only contains the right eye.

The images of both eyes are combined, that is, the above-mentioned left eye image and the above-mentioned right eye image are combined to obtain a corresponding binocular image. In an example, if the left eye image has a size of 56×36×3 (3 represents three channels of R, G and B) and the right eye image has a size of 56×36×3 (3 represents three channels of R, G and B), a combination of the left eye image and the right eye image may have a size of 56×36×6.

In the embodiments of the present disclosure, the pre-trained pupil color recognition model may be directly called, and the above-mentioned binocular image may be used as the input of the model for the pupil color recognition. In an example, the pupil color recognition model may be a convolutional neural network including five convolution layers, three maximum pooling layers, and one fully connected layer.

Through the embodiments of the present disclosure, using the binocular image for the pupil color recognition may avoid a case that one eye is closed or blocked, which may result in a failure of the pupil color recognition or a poor effect of the pupil color recognition.

In other embodiments, a corresponding monocular image (e.g., the left eye image or the right eye image) may be cut out from each face image obtained after the preprocessing for subsequent pupil color recognition. Methods of cutting out the left eye image and the right eye image are the same as the methods of cutting out the left eye image and the right eye image involved in the process of cutting out the binocular image, which will not be repeated here.

It should be understood that compared with using the binocular image for the pupil color recognition, using the monocular image for the pupil color recognition is more likely to cause a failure of the pupil color recognition or a poor effect of the pupil color recognition effect due to one eye is closed or blocked.

Further, as an embodiment, the operation that recognizing, based on the eye image sequence, a color of an optical spot caused by a pupil in each eye image of the plurality of eye images, so as to obtain a pupil color recognition result, may include: inputting each binocular image in the eye image sequence into the pupil color recognition model to output a corresponding pupil color recognition result.

It should be noted that the pupil color recognition model may be pre-trained and may be called directly during the pupil color recognition.

As an embodiment, the method may further include: before acquiring the face image sequence including the plurality of face images, controlling the electronic device to emit a light having a color at a predetermined time interval within a preset time period after the face recognition process is started, and controlling the electronic device to capture a face image after each light having a color is emitted.

Through the embodiments of the present disclosure, a principle that the pupil of eye may cause optical spots having different colors when the face is illuminated by lights having different colors may be used to determine whether the actually acquired face image is an image of a living face captured on site by the electronic device based on the current task or not.

Further, as an embodiment, controlling the electronic device to emit a light having a color at a predetermined time interval within a preset time period may include controlling the electronic device to emit a light having a random color at the predetermined time interval within the preset time period.

As an embodiment, controlling the electronic device to emit a light having a color at a predetermined time interval within a preset time period may include controlling a display screen of the electronic device to emit a light having a random color at the predetermined time interval within the preset time period.

Alternatively, in other embodiments of the present disclosure, the electronic device may also be controlled to emit a light having a predetermined color at the predetermined time interval within the preset time period. In an example, the electronic device may be controlled to emit a red light, a green light and a blue light in sequence each time the face anti-spoofing is performed.

Alternatively, in other embodiments of the present disclosure, the electronic device may be controlled to emit a light having a predetermined color according to a preset logic at the predetermined time interval within the preset time period. In an example, three light emitting sequences may be set, such as "00 indicating emitting a red light, a green light and a blue light in sequence", "01 indicating emitting a green light, a red light and a blue light in sequence", and "10 indicating emitting a blue light, a green light and a red light in sequence". During a first anti-spoofing to an N^{th} face anti-spoofing, the lights having corresponding colors may be emitted in sequence according to an order of 00, 01, 10, 00, 01, 10...

It should be understood that compared with controlling the electronic device to emit a light having a corresponding color in other manners, controlling the electronic device to emit a light having a random color may increase a difficulty for the attacker to decode the color sequence, and further improve the security of the face anti-spoofing.

Further, as an embodiment, controlling the electronic device to emit a light having a random color at a predetermined time interval within a preset time period may include controlling the electronic device to display a picture having a random color at the predetermined time interval within the preset time period so as to emit a light having a corresponding color.

As an embodiment, controlling the electronic device to emit a light having a random color at a predetermined time interval within a preset time period may include controlling a display screen of the electronic device to display a picture having a random color at the predetermined time interval within the preset time period so as to emit a light having a corresponding color.

In an example, when a red light, a green light and a blue light needs to be emitted sequentially by controlling the electronic device, it may be achieved by sequentially displaying a red picture, a green picture and a blue picture on the screen of the electronic device.

Through the embodiments of the present disclosure, there is no need to add an additional active light source on the face recognition device, so that the cost may be saved.

According to the embodiments of the present disclosure, the present disclosure also provides another method of face anti-spoofing.

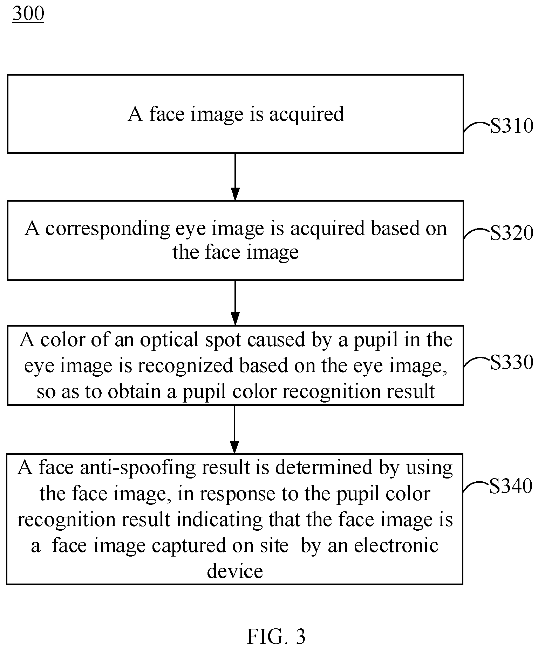

FIG. 3 schematically shows a flowchart of a method of face anti-spoofing according to another embodiment of the present disclosure.

As shown in FIG. 3, a method 300 of face anti-spoofing may include operations S310 to S340.

In operation S310, a face image is acquired.

In operation S320, a corresponding eye image is acquired based on the face image.

In operation S330, a color of an optical spot caused by a pupil in the eye image is recognized based on the eye image, so as to obtain a pupil color recognition result.

In operation S340, the face image is used for face anti-spoofing, in response to the pupil color recognition result indicating that the face image is a face image captured on site by an electronic device.

It should be noted that the pupil color recognition result may be used to determine whether the face image is an image captured on site after a face recognition process is started by the electronic device. After starting the face recognition process, the electronic device may emit a light having a random color and capture an image.

In some embodiments, during each face anti-spoofing, whether the currently acquired face images are images captured on site after the electronic device starts the current face recognition process or not may be verified. When it is determined that the currently acquired face images are images captured on site after the electronic device starts the current face recognition process, at least one of the currently acquired face images may be used as the input of the face anti-spoofing model to continuously perform the face anti-spoofing. In this way, it may be ensured that the image actually used for the face anti-spoofing is a face image captured on site by the current electronic device for the current face anti-spoofing task, rather than a face image attack sample illegally injected by an attacker by blocking the current electronic device from capturing an image on site.

Therefore, through the embodiments of the present disclosure, in the face anti-spoofing process, an injection attack of face image attack sample may be prevented, so that the security of face recognition may be improved.

When a face is illuminated with lights having different colors, optical spots having different colors may be caused by a pupil of the eye. Therefore, in the embodiments of the present disclosure, it is considered to use this principle to verify whether the currently acquired face image is an image captured on site after the electronic device starts the current face recognition process.

In an example, a random color verification code may be generated during each face anti-spoofing, while the electronic device may be controlled to emit a light having a corresponding color to illuminate the face according to the color verification code. For example, if the color verification code represents red, a red light may be emitted. The electronic device may capture a face image after emitting the light having the corresponding color, for example, capture a face image after emitting a red light. On this basis, in the current face anti-spoofing process, the face image acquired by the face anti-spoofing module in theory should be the above-mentioned face image containing red light information. However, there is a possibility that an attacker injects a face image attack sample to pass for the above-mentioned face image. Therefore, the corresponding eye image may be acquired based on the actually acquired face image, and then a pupil color algorithm may be used to verify whether a color of an optical spot caused by a pupil in the eye image is consistent with the color represented by the above-mentioned verification code or not, such as whether the color of the optical spot is red or not. If the two are consistent, it is determined that the image actually acquired by the face anti-spoofing module is a face image captured on site by the electronic device in the current face anti-spoofing task. Otherwise, if the two are inconsistent, it is determined that the image actually acquired by the face anti-spoofing module is an illegally injected face image attack sample.

Further, in some application scenes, there are other attack manners, such as attacking by using an attack tool, e.g., electronic photo, paper photo, or 3D head model, 3D headgear, etc., which is pretended to be a living face.

The reflectivity of attack tools of various materials to light may be different from a reflectivity of a living skin to light. In operation S340 of the method of face anti-spoofing based on active light, at least one face image in the face image sequence is used for face anti-spoofing, which may fully consider the reflectivity of living face to light and the reflectivity of non-living face to light, that is, it may be determined whether the face image input into the model is an image taken from a living face or an image taken from an attack tool. Therefore, the scheme may be implemented to obtain a more accurate face anti-spoofing result.

It should be understood that in the embodiments of the present disclosure, the face anti-spoofing model may be pre-trained based on a positive face image sample and various negative samples (such as various face image attack samples). In operation S340, the acquired face image may be directly input into the model for face anti-spoofing.

Therefore, through the embodiments of the present disclosure, the accuracy and generalization of the anti-spoofing algorithm may be greatly improved in a case of a complex sample attack in the face anti-spoofing process.

It should be noted that in the embodiments of the present disclosure, when a random color is generated as the verification code, the verification code contains only one color information. Therefore, although the scheme may increase the difficulty of color decoding and improve the face anti-spoofing performance, this improvement is very limited compared with the verification code containing a variety of color information.

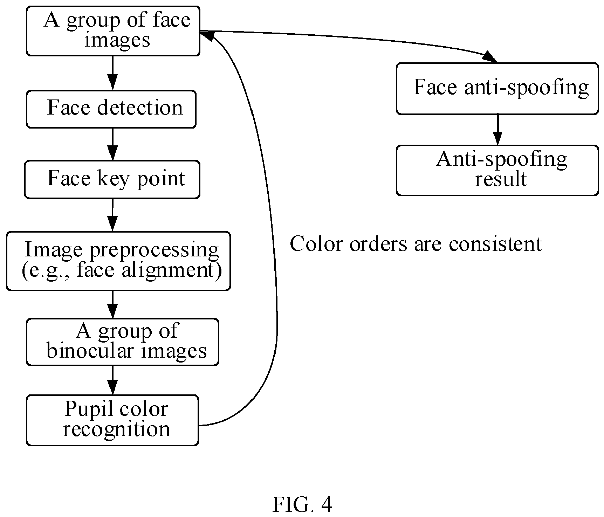

The present disclosure will be described in detail below with reference to FIG. 4 and specific embodiments.

As shown in FIG. 4, in the face anti-spoofing process, after acquiring a group of face images (a face image sequence including one or more face images), each face image is detected by a face detection model to obtain a location region of a target face in the face image. Then, a face key point is detected. Then, a preprocessing (including a face alignment) is performed on each image. Next, a corresponding binocular image is cut out according to the face key point, and a pupil color recognition is performed on each binocular image. If the pupil color recognition result indicates that a color order of the group of face images is consistent with the color order represented by the generated random color verification code, at least one face image in the group of face images is used as the input of the face anti-spoofing model for face anti-spoofing, and a corresponding anti-spoofing result may be output.

According to the embodiments of the present disclosure, the present disclosure provides an apparatus of face anti-spoofing.

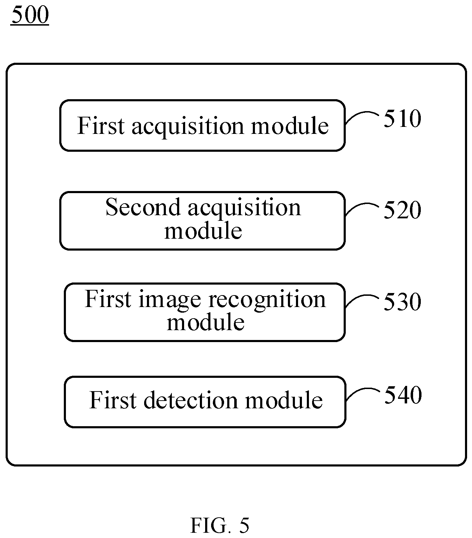

FIG. 5 schematically shows a block diagram of an apparatus of face anti-spoofing according to the embodiments of the present disclosure.

As shown in FIG. 5, an apparatus 500 of face anti-spoofing may include a first acquisition module 510, a second acquisition module 520, a first image recognition module 530 and a first detection module 540.

The first acquisition module 510 is used to acquire a face image sequence including a plurality of face images.

The second acquisition module 520 is used to acquire, based on the face image sequence, a corresponding eye image sequence including a plurality of eye images.

The first image recognition module 530 is used to recognize, based on the eye image sequence, a color of an optical spot caused by a pupil in each eye image of the plurality of eye images, so as to obtain a pupil color recognition result.

The first detection module 540 is used to determine a face anti-spoofing result by using at least one face image in the face image sequence, in response to the pupil color recognition result indicating that the face image sequence is a sequence of face images captured on site after a face recognition process is started by an electronic device.

As an embodiment, the second acquisition module is further used to: for each face image in the face image sequence, perform a face region detection to obtain a first image in which a target face has been detected; determine a key point coordinate of the target face based on the first image; and perform a face alignment on the target face based on the key point coordinate, so as to obtain a second image; and determine a corresponding eye image in the eye image sequence based on the second image.

As an embodiment, the second acquisition module is further used to: acquire a left eye image and a right eye image based on the second image; and combine the left eye image and the right eye image, so as to obtain a corresponding binocular image.

As an embodiment, the first image recognition module is further used to: input each binocular image in the eye image sequence into a pupil color recognition model, so as to output a corresponding pupil color recognition result.

As an embodiment, the apparatus may further include: a control module used to: before the face image sequence including the plurality of face images is acquired, control the electronic device to emit a light having a color at a predetermined time interval within a preset time period after the face recognition process is started, and control the electronic device to capture a face image after each light having a color is emitted.

As an embodiment, the control module is further used to: control the electronic device to emit a light having a random color at the predetermined time interval within the preset time period.

As an embodiment, the control module is further used to: control the electronic device to display a picture having a random color at the predetermined time interval within the preset time period so as to emit a light having a corresponding color.

According to the embodiments of the present disclosure, the present disclosure also provides another apparatus of face anti-spoofing.

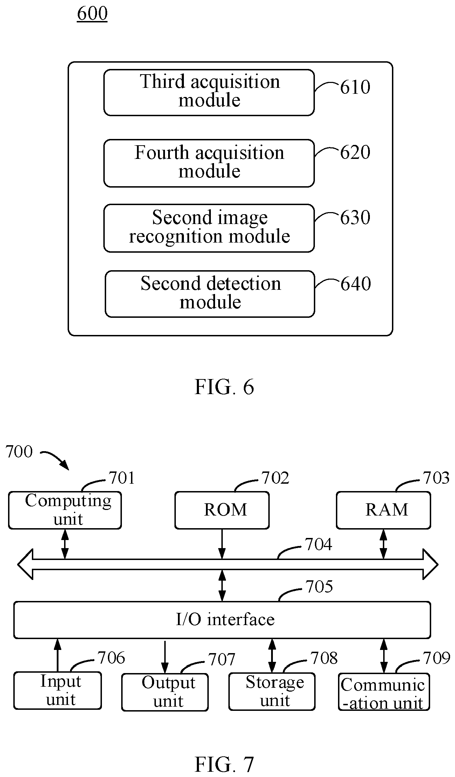

FIG. 6 schematically shows a block diagram of an apparatus of face anti-spoofing according to the embodiments of the present disclosure.

As shown in FIG. 6, an apparatus 600 of face anti-spoofing may include a third acquisition module 610, a fourth acquisition module 620, a second image recognition module 630, and a second detection module 640.

The third acquisition module 610 is used to acquire a face image.

The fourth acquisition module 620 is used to acquire a corresponding eye image based on the face image.

The second image recognition module 630 is used to recognize, based on the eye image, a color of an optical spot caused by a pupil in the eye image, so as to obtain a pupil color recognition result.

The second detection module 640 is used to determine a face anti-spoofing result by using the face image, in response to the pupil color recognition result indicating that the face image is captured on site after a face recognition process is started by an electronic device.

It should be understood that the embodiments of the apparatus of the present disclosure are correspondingly identical or similar to the embodiments of the method of the present disclosure, and the technical problems solved and the technical effects achieved are correspondingly identical or similar to each other, which will not be repeated here.

In the technical solution of the present disclosure, the collection, storage, use, processing, transmission, provision, disclosure and application of the user's personal information involved are all in compliance with the provisions of relevant laws and regulations, and necessary confidentiality measures have been taken, and it does not violate public order and good morals.

In the technical solution of the present disclosure, before obtaining or collecting the user's personal information, the user's authorization or consent is obtained.

According to the embodiments of the present disclosure, the present disclosure further provides an electronic device, a readable storage medium, and a computer program product.

FIG. 7 shows a schematic block diagram of an exemplary electronic device 700 for implementing the embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 7, the electronic device 700 may include a computing unit 701, which may perform various appropriate actions and processing based on a computer program stored in a read-only memory (ROM) 702 or a computer program loaded from a storage unit 708 into a random access memory (RAM) 703. Various programs and data required for the operation of the electronic device 700 may be stored in the RAM 703. The computing unit 701, the ROM 702 and the RAM 703 are connected to each other through a bus 704. An input/output (I/O) interface 705 is further connected to the bus 704.

Various components in the electronic device 700, including an input unit 706 such as a keyboard, a mouse, etc., an output unit 707 such as various types of displays, speakers, etc., a storage unit 708 such as a magnetic disk, an optical disk, etc., and a communication unit 709 such as a network card, a modem, a wireless communication transceiver, etc., are connected to the I/O interface 705. The communication unit 709 allows the electronic device 700 to exchange information/data with other devices through a computer network such as the Internet and/or various telecommunication networks.

The computing unit 701 may be various general-purpose and/or special-purpose processing components with processing and computing capabilities. Some examples of the computing unit 701 include but are not limited to a central processing unit (CPU), a graphics processing unit (GPU), various dedicated artificial intelligence (AI) computing chips, various computing units running machine learning model algorithms, a digital signal processor (DSP), and any appropriate processor, controller, microcontroller, and so on. The computing unit 701 may perform the various methods and processes described above, such as the method of face anti-spoofing. For example, in some embodiments, the method of face anti-spoofing may be implemented as a computer software program that is tangibly contained on a machine-readable medium, such as a storage unit 708. In some embodiments, part or all of a computer program may be loaded and/or installed on the electronic device 700 via the ROM 702 and/or the communication unit 709. When the computer program is loaded into the RAM 703 and executed by the computing unit 701, one or more steps of the method of face anti-spoofing described above may be performed. Alternatively, in other embodiments, the computing unit 701 may be configured to perform the method of face anti-spoofing in any other appropriate way (for example, by means of firmware).

Various embodiments of the systems and technologies described herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from the storage system, the at least one input device and the at least one output device, and may transmit the data and instructions to the storage system, the at least one input device, and the at least one output device.

Program codes for implementing the method of the present disclosure may be written in any combination of one or more programming languages. These program codes may be provided to a processor or a controller of a general-purpose computer, a special-purpose computer, or other programmable data processing devices, so that when the program codes are executed by the processor or the controller, the functions/operations specified in the flowchart and/or block diagram may be implemented. The program codes may be executed completely on the machine, partly on the machine, partly on the machine and partly on the remote machine as an independent software package, or completely on the remote machine or the server.

In the context of the present disclosure, the machine readable medium may be a tangible medium that may contain or store programs for use by or in combination with an instruction execution system, device or apparatus. The machine readable medium may be a machine-readable signal medium or a machine-readable storage medium. The machine readable medium may include, but not be limited to, electronic, magnetic, optical, electromagnetic, infrared or semiconductor systems, devices or apparatuses, or any suitable combination of the above. More specific examples of the machine readable storage medium may include electrical connections based on one or more wires, portable computer disks, hard disks, random access memory (RAM), read-only memory (ROM), erasable programmable read-only memory (EPROM or flash memory), optical fiber, convenient compact disk read-only memory (CD-ROM), optical storage device, magnetic storage device, or any suitable combination of the above.

In order to provide interaction with users, the systems and techniques described here may be implemented on a computer including a display device (for example, a CRT (cathode ray tube) or LCD (liquid crystal display) monitor) for displaying information to the user), and a keyboard and a pointing device (for example, a mouse or a trackball) through which the user may provide the input to the computer. Other types of devices may also be used to provide interaction with users. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and Internet.

In the technical solution of the present disclosure, an acquisition, a storage and an application of user information involved comply with provisions of relevant laws and regulations, and do not violate public order and good custom.

The computer system may include a client and a server. The client and the server are generally far away from each other and usually interact through a communication network. The relationship between the client and the server is generated through computer programs running on the corresponding computers and having a client-server relationship with each other. The server may be a cloud server, also referred to as a cloud computing server or a cloud host, which is a host product in the cloud computing service system to solve shortcomings of difficult management and weak business scalability in conventional physical host and VPS (Virtual Private Server) service. The server may also be a server of a distributed system, or a server combined with a block-chain.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-mentioned specific embodiments do not constitute a limitation on the scope of protection of the present disclosure. Those skilled in the art should understand that various modifications, combinations, sub-combinations and substitutions may be made according to design requirements and other factors. Any modifications, equivalent replacements and improvements made within the spirit and principles of the present disclosure shall be contained in the scope of protection of the present disclosure.

## Claims

1. A method (200) of face anti-spoofing, comprising:
acquiring (S210) a face image sequence comprising a plurality of face images;
acquiring (S220), based on the face image sequence, a corresponding eye image sequence comprising a plurality of eye images;
recognizing (S230), based on the eye image sequence, a color of an optical spot caused by a pupil in each eye image of the plurality of eye images, so as to obtain a pupil color recognition result; and
determining (S240) a face anti-spoofing result by using at least one face image in the face image sequence, in response to the pupil color recognition result indicating that the face image sequence is a sequence of face images captured on site after a face recognition process is started.

2. The method (200) according to claim 1, wherein the acquiring, based on the face image sequence, a corresponding eye image sequence comprising a plurality of eye images comprises:
for each face image in the face image sequence,
performing a face region detection to obtain a first image in which a target face has been detected;
determining a key point coordinate of the target face based on the first image;
performing a face alignment on the target face based on the key point coordinate, so as to obtain a second image; and
determining a corresponding eye image in the eye image sequence based on the second image.

3. The method (200) according to claim 2, wherein the determining a corresponding eye image in the eye image sequence based on the second image comprises:
acquiring a left eye image and a right eye image based on the second image; and
combining the left eye image and the right eye image, so as to obtain a corresponding binocular image in the eye image sequence.

4. The method (200) according to claim 3, wherein the recognizing, based on the eye image sequence, a color of an optical spot caused by a pupil in each eye image of the plurality of eye images, so as to obtain a pupil color recognition result comprises:
inputting each binocular image in the eye image sequence into a pupil color recognition model, so as to output a corresponding pupil color recognition result.

5. The method (200) according to any one of claims 1 to 4, further comprising: before acquiring the face image sequence comprising the plurality of face images,
emitting a light having a color at a predetermined time interval within a preset time period after the face recognition process is started, and capturing a face image after each light having a color is emitted.

6. The method (200) according to claim 5, wherein the emitting a light having a color at a predetermined time interval within a preset time period after the face recognition process is started comprises:
emitting a light having a random color at the predetermined time interval within the preset time period.

7. The method (200) according to claim 6, wherein the emitting a light having a random color at the predetermined time interval within the preset time period comprises:
displaying a picture having a random color at the predetermined time interval within the preset time period so as to emit a light having a corresponding color.

8. A method (300) of face anti-spoofing, comprising:
acquiring (S310) a face image;
acquiring (S320) a corresponding eye image based on the face image;
recognizing (S330), based on the eye image, a color of an optical spot caused by a pupil in the eye image, so as to obtain a pupil color recognition result; and
determining (S340) a face anti-spoofing result by using the face image, in response to the pupil color recognition result indicating that the face image is captured on site after a face recognition process is started.

9. An apparatus (500) of face anti-spoofing, comprising:
a first acquisition module (510) configured to acquire a face image sequence comprising a plurality of face images;
a second acquisition module (520) configured to acquire, based on the face image sequence, a corresponding eye image sequence comprising a plurality of eye images;
a first image recognition module (530) configured to recognize, based on the eye image sequence, a color of an optical spot caused by a pupil in each eye image of the plurality of eye images, so as to obtain a pupil color recognition result; and
a first detection module (540) configured to determine a face anti-spoofing result by using at least one face image in the face image sequence, in response to the pupil color recognition result indicating that the face image sequence is a sequence of face images captured on site after a face recognition process is started.

10. An electronic device (700), comprising:
at least one processor; and
a memory communicatively connected to the at least one processor, wherein the memory stores instructions executable by the at least one processor, and the instructions, when executed by the at least one processor, cause the at least one processor to:
acquire (S210) a face image sequence comprising a plurality of face images;
acquire (S220), based on the face image sequence, a corresponding eye image sequence comprising a plurality of eye images;
recognize (S230), based on the eye image sequence, a color of an optical spot caused by a pupil in each eye image of the plurality of eye images, so as to obtain a pupil color recognition result; and
determine (S240) a face anti-spoofing result by using at least one face image in the face image sequence, in response to the pupil color recognition result indicating that the face image sequence is a sequence of face images captured on site after a face recognition process is started.

11. The electronic device (700) according to claim 10, further comprising a display screen (102) and a camera (101),
wherein the at least one processor is further configured to:
control the display screen (102) to emit a light having a color at a predetermined time interval within a preset time period after the face recognition process is started, and control the camera (101) to capture a face image after each light having a color is emitted.

12. The electronic device (700) according to claim 11, wherein the at least one processor is further configured to:
control the display screen (102) to emit a light having a random color at the predetermined time interval within the preset time period.

13. The electronic device (700) according to claim 12, wherein the at least one processor is further configured to:
control the display screen (102) to display a picture having a random color at the predetermined time interval within the preset time period so as to emit a light having a corresponding color.

14. A non-transitory computer-readable storage medium having computer instructions stored thereon, wherein the computer instructions are configured to cause a computer to implement the method of any one of claims 1 to 8.

15. A computer program product containing a computer program, wherein the computer program, when executed by a processor, causes the processor to implement the method of any one of claims 1 to 8.
